# EUROPÄISCHE PATENTSCHRIFT

(11) **EP 0 525 226 B1**
(45) Veröffentlichungstag und Bekanntmachung des Hinweises auf die Patenterteilung: **02.11.1995**
(21) Anmeldenummer: 91112464.2
(22) Anmeldetag: 25.07.1991
(51) Int. Cl.: B09B 3/00, H01J 9/50

(54) **Verfahren zur Aufbereitung von beschichtetem Glas**
Method for the treatment of coated glass
Procédé de traitement de verre comportant un revêtement

(43) Veröffentlichungstag der Anmeldung: 03.02.1993
(73) Patentinhaber: Ed. Züblin Aktiengesellschaft, D-70567 Stuttgart (DE)
(72) Erfinder: Mühlberger, Johann, W-8889 Syrgenstein (DE); Gläser, Eberhard, W-7303 Aichwald 4 (DE); Maier, Stefan, Dr., W-7016 Gerlingen (DE)
(74) Vertreter: Wasmuth, Rolf, Dipl.-Ing.

(56) Entgegenhaltungen:
- DE-A- 3 901 842
- DE-A- 3 909 380
- DE-A- 4 003 497
- US-A- 3 035 909
- US-A- 4 435 284
- PATENT ABSTRACTS OF JAPAN vol. 1, no. 151 (M-77)(5420) 6. Dezember 1977

## Beschreibung

Die Erfindung betrifft ein Verfahren zur Aufbereitung von beschichtetem Bildröhrenglas.

In der Technik wird beschichtetes Glas in vielen Anwendungsfällen eingesetzt. So bestehen Bildröhren für Fernseher, Computer, Radarschirme oder dgl. aus einem Glasschirm mit einer Beschichtung aus Leuchtstoff und einem Glaskonus, der mit leitendem Lack beschichtet ist. Dem Schirmglas wird zum Strahlenschutz Barium zugesetzt, während das Konusglas Bleioxyd und Barium in geringerer Konzentration enthält.

Altbildröhren werden zur Entsorgung auf Deponien abgelagert, obwohl insbesondere die Beschichtungen nicht heiter gebundene Giftstoffe enthalten. Auch Ausschußröhren, bei denen nach der Fertigung nicht auszugleichende Fehler festgestellt werden, werden deponiert.

Neben der bestehenden Umweltgefährdung durch auswaschbare Giftstoffe führt die Ablagerung der großvolumigen Röhren zu einem erheblichen Deponieverbrauch und zu einem Verlust an Glas bis zu 20 kg pro Röhre. Bei jährlich in der Bundesrepublik publik Deutschland anfallenden Altbildröhren von ca. 4 Millionen sowie 1 Million Röhren aus Computerbildschirmen und einer jährlichen Ausschußrate in der Fertigung von ca. 100.000 Bildröhren besteht ein erheblicher Bedarf an Deponieraum für diese Materialmenge.

Aus der DE 39 01 842 A1 ist ein Verfahren zur Trennung von Schirmglas und Konusglas bei einer Bildröhre bekannt. Konus und Schirm können nach Trennung zum Beispiel durch Abstrahlen mit Sand oder Wasser unter Hochdruck gereinigt und dann wiederverwendet werden, wodurch Deponien entlastet werden können. Ein solches Verfahren ist aber sehr energieintensiv und nur dann erfolgreich, wenn das Schirmglas bzw. der Glaskonus beim Abstrahlen keine Beschädigungen davontragen, die eine Weiterverwendung ausschließen.

Aus der DE 39 09 380 A1 ist ein Verfahren bekannt, wobei verbrauchte Leuchtstoffröhren und Gasdrucklampen unter Flüssigkeitsabschluß zu Gasdruckmaterial zertrümmert werden. Die Anschlußkappen werden dabei weitestgehend nicht beeinträchtigt und können von dem Glasbruchmaterial abgesiebt werden. Das Glasbruchmaterial mit den anhaftenden Leuchtstoffschichten, die zum Teil mit Quecksilber kontaminiert sind, wird durch mechanische Bewegung in einer Flüssigkeit gereiningt. Der kontaminierte Leuchtstoff setzt sich in der Flüssigkeit ab, die nach der Klärung wieder dem Prozeß zugeführt werden kann. Neben den wertvollen Leuchtstoffen, die in wirtschaftlich verwertbarem Maße Quecksilber enthalten können, fällt wiederverwertbares Glasbruchmaterial und Metall an, wobei hier insbesondere das Wendelmaterial als Wertstoff interessant ist.

Der Erfindung liegt die Aufgabe zugrunde, ein Verfahren zur Aufbereitung von beschichtetem Bildröhrenglas anzugeben, mit dem die Bildröhren recycelt werden können.

Diese Aufgabe wird durch das Verfahren gemäß Anspruch 1 gelöst.

Die Durchmischung des Glasbruchs in einem Mischer bewirkt ein Aneinanderreiben der Glasbruchstücke, wodurch die Beschichtungen abgerieben werden. Neben dem Abrieb der Beschichtungen bewirken die intensive Durchmischung des Glasbruchs und das Aneinanderreiben der Bruchstücke eine Abrundung der Kanten, wodurch die einzelnen Glasbruchstücke nach deren Reinigung ohne Verletzungsgefahr leicht gehandhabt werden können, so zum Beispiel zur manuellen Sortierung von Schirmglas und Konusglas zur getrennten Wiederverwendung. Mittels der Flüssigkeit wird der Abrieb ausgetragen, so daß der aus dem Mischer abgezogene Glasbruch unmittelbar der Wiederverwendung zugeführt werden kann. Selbst wenn eine Wiederverwendung nicht möglich ist, kann das Endprodukt der Reinigung auf jeder Deponie ohne Gefahren für die Umwelt gelagert werden.

Zur Steigerung des Abriebs und damit zur Verkürzung der Behandlungsdauer können dem Glasbruch im Mischer Reibkörper zugegeben werden, die vorzugsweise Kugeln, Ellipsoide, Quader oder dgl. mit abrasiver Oberfläche sind oder auch Sand oder metallische Stoffe sein können. Auch sind auf den Glasbruch einwirkende Einbauten im Mischer, so zum Beispiel Messer, Bänder oder Ketten vorteilhaft.

Die dem Mischer zugegebene Flüssigkeit ist insbesondere Wasser, welches in einem geschlossenen Kreislauf umgepumpt wird. Um den Glasbruch von Partikeln zu befreien, die nach dem Abreibvorgang lediglich adhäsiv anhaften, wird der Glasbruch einer Abdüseinrichtung zugeführt. Das ablaufende Wasser trägt die abgewaschenen Verunreinigungen aus dem Mischer aus, die dann durch Absetzen oder Filtrieren vom Wasser getrennt werden.

Um bei der Behandlung der Bildröhren eine personengefährdende Implosion zu vermeiden, ist vorgesehen, die Bildröhre zunächst zu belüften und erst dann zu zertrümmern. Auch können vorteilhaft das Schirmglas und Konusglas vor der Behandlung im Mischer voneinander getrennt und jeweils für sich behandelt werden, so daß das optisch hochwertigere Schirmglas einer Schmelze für Glasschirme zugeführt werden kann, während das optisch weniger wertvolle Konusglas zur Konusherstellung verwendet wird. Insbesondere wird das farblich sich unterscheidende Glas von Schirm und Konus erst nach dem Waschen zum Beispiel per Hand sortiert, um eine getrennte Wiederverwertung zu ermöglichen.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: in schematischer Darstellung die Einzelteile einer Bildröhre,
- Fig. 2: in schematischer Darstellung eine Vorrichtung zur Aufbereitung von beschichtetem Glas, insbesondere dem Glas von Bildröhren,
- Fig. 3: eine Seitenansicht auf einen Durchlaufmischer,
- Fig. 4: eine Draufsicht auf den Durchlaufmischer gemäß Fig. 3.

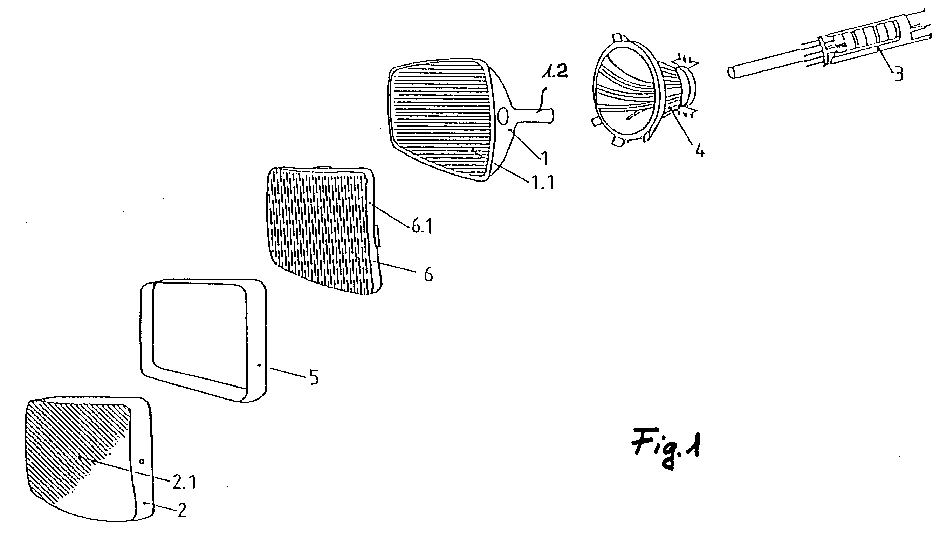

Die in Fig. 1 dargestellte Bildröhre weist einen Glaskonus 1 mit einer inneren Beschichtung 1.1 aus leitendem Lack oder dgl. auf. Der Glaskonus ist umgeben von einer Ablenkeinheit 4, welche den Strahl eines Strahlenerzeugers 3 entsprechend den angelegten Steuerspannungen ablenkt. Der Strahlenerzeuger 3 ist im Konushals gehalten.

Zwischen dem Glasschirm 2 mit einer aufgebrachten Leuchtschicht 2.1 und dem Konusglas 1 ist eine Maske 6 angeordnet, die mittels eines Maskenrahmens 6.1 eingespannt ist. Innerhalb der so zusammengesetzten Bildröhre ist ferner zwischen Maske 6 und Schirm 2 ein Implosionsschutzrahmen 5 angeordnet. Der Glasschirm wird über eine sogenannte "Fritte" am Glaskonus druckdicht befestigt.

Eine gemäß den einzelnen Bauteilen nach Fig. 1 gefertigte Bildröhre wird auf ihre Funktionsfähigkeit überprüft. Werden Fehler festgestellt, werden diese - soweit möglich - durch Nachbearbeitung behoben. Hierzu kann es erforderlich sein, die Fritte zu öffnen, um den Schirm 2 vom Glaskonus 1 zu trennen. Durch Abstrahlen zum Beispiel mit Sand oder mit Wasser, vorzugsweise unter Hochdruck, kann ggf. eine fehlerhafte Beschichtung entfernt und der entsprechende Glasschirm bzw. der Glaskonus wieder dem Produktionsprozeß zugeführt werden.

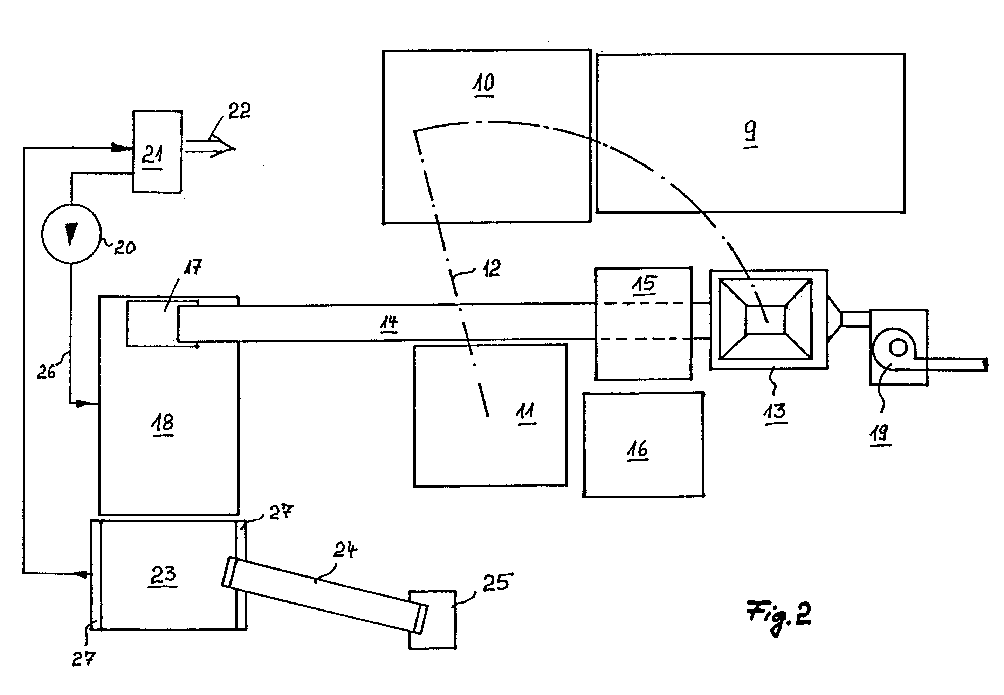

Irreparable Bildröhren gehen als Ausschuß in ein Glaslager 10 (Fig. 2), das aus einem Großcontainer gebildet sein kann. Über eine Rampe 9 können Förderfahrzeuge das Glaslager 10 beschicken. Da hierbei der insbesondere hochempfindliche Konushals 1.2 (Fig. 1) abbrechen kann, was zu einer Implosion der Bildröhre führen würde, ist vorgesehen, vor Ablagerung der Ausschußbildröhren im Glaslager 10 zur Belüftung des Glaskonus im Bereich des Konushalses vorzugsweise mittels eines Lasers ein Loch zu öffnen, wodurch die Bildröhre belüftet wird. Die Bildröhren werden sodann von einem Ladekran 11 über eine am Ausleger 12 angeordnete Greifvorrichtung erfaßt und in einen Brecher 13 gefördert, in dem die Bildröhren zertrümmert werden. Die Bildröhrenbruchstücke, deren Größe durch die Art des Brechers 13 und die Behandlungsdauer bestimmt ist, werden über das Förderband 14 aus dem Brecher 13 abgezogen und durchlaufen auf dem Förderband 14 einen Metallabscheider 15, durch den die Bildröhrenbruchstücke in Glasbruch und Metallteile vorzugsweise magnetisch getrennt werden. Die Metallteile werden in einen seitlich neben dem Förderband 14 angeordneten Metallbehälter 16 abgeworfen, während der Glasbruch über das Förderband 14 dem Einlauf 17 eines Mischers 18 zugeführt wird. Während des Betriebes des Brechers 13 läuft ein Gebläse 19, welches den Staub über einen Filter abzieht. Damit wird eine Kontamination der Umwelt mit verunreinigten Stäuben ausgeschlossen.

Der dargestellte Mischer 18 ist vorzugsweise ein Freifallmischer, d.h., daß zur Trennung der Beschichtung vom Glas der Glasbruch bis etwa zum höchsten Scheitelpunkt mitgenommen wird und dort im freien Fall in das Mischgut zurückfällt. Bei dieser Mischbewegung reiben sich die einzelnen Glasbruchstücke aneinander, wodurch ein Reinigungseffekt erzielt wird, durch den die Beschichtung des Glasbruches rückstandsfrei entfernt wird. Darüberhinaus erfolgt durch die Mischbewegung ein Abschleifen der scharfen Bruchkanten der einzelnen Glasbruchstücke, so daß sie bei der späteren Weiterverwendung ohne große Verletzungsgefahr manuell handhabbar sind.

Die gesamte Charge von behandeltem Glasbruch, der Waschflüssigkeit, insbesondere Wasser sowie abgeriebener Beschichtung wird gemeinsam in das Sieb 23 ausgetragen. Dort wird über mehrere Düsen einer Abdüseinheit 27 der Glasbruch von noch adhäsiv anhaftenden Teilchen befreit. Die Waschflüssigkeit mit Glasabrieb und den Beschichtungsteilchen bzw. Verunreinigungen wird mittels einer Pumpe 20 über eine Filterstufe 21 abgezogen, in der die festen Bestandteile vom Waschwasser getrennt werden. Das Wasser wird über die Leitung 26 wieder dem Mischer zugeführt. Der ausgefilterte Beschichtungsabrieb wird entnommen (Pfeil 22) und kann, sofern er nicht weiterverwendbar ist, deponiert werden, wozu nur kleine Deponievolumina nötig sind.

In dem Sieb 23 bleiben die gereinigten Glasbruchstücke zurück und werden über ein Förderband 24 einem Glascontainer 25 zum Abtransport zugeführt.

Da bei einer Glasschmelze zum Energieeintrag in die Schmelze ein Bruchglasanteil zwingend erforderlich ist, kann das mit dem erfindungsgemäßen Verfahren gereinigte Altglas unmittelbar einer Glasschmelze zugeführt werden. Dabei ist ein Zusatz von bis zu 10 % Altglas zur Schmelze realistisch.

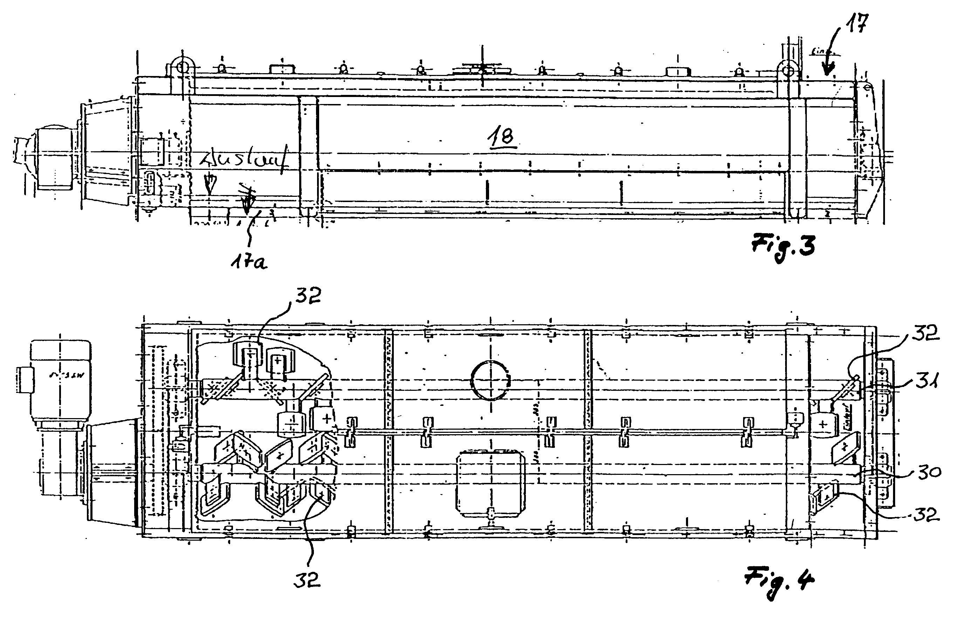

In den Fig. 3 und 4 ist ein mögliches Ausführungsbeispiel eines in der Vorrichtung nach Fig. 2 verwendeten Mischers für einen kontinuierlichen Betrieb gezeigt. Dem Einlauf 17 wird über das Förderband 14 (Fig. 2) der Glasbruch zugeführt. Im Mischer sind zwei rotierende Mischerwellen 30 und 31 angeordnet, von denen Mischwerkzeuge 32 radial abstehen. Die Mischwerkzeuge sind derart angeordnet, daß bei Rotation der Mischerwellen 30 und 31 der Glasbruch längs des Mischers 18 zum Auslauf 17a gefördert wird, unter dem vorzgusweise das Sieb 23 angeordnet ist. Durch die im Mischer 18 erfolgende Durchmischung des Glasbruchs reiben die einzelnen Bruchstücke aneinander, wodurch deren Beschichtung abgerieben und - wie zu Fig. 2 beschrieben - über das Waschwasser abtransportiert werden. Zur Unterstützung dieses Wascheffektes werden dem Mischer zusätzlich zum Glasbruch Reibkörper zugegeben, wodurch der Wascheffekt erheblich erhöht und somit die kontinuierliche Durchsatzleistung des gezeigten Durchlaufmischers gesteigert ist. Derartige Reibkörper können Kugeln, Ellipsoide, Quader, Sterne oder dgl. mit Ecken und Kanten oder abrasiver Oberfläche sein. In bevorzugter Ausführung werden dem Mischer zusätzlich zum Glasbruch und dem Waschwasser Sand oder andere metallische Stoffe zur Erhöhung des Wascheffektes zugegeben.

Es kann von Vorteil sein, im Mischer selbst Einbauten wie Messer, Bänder oder Ketten vorzusehen, welche im innigen Kontakt mit dem Glasbruch die Reinigung der einzelnen Bruchstücke bewirken. Dabei sind die Bänder und Ketten vorzugsweise nur an einem ihrer Enden an der Innenwand der Mischertrommel befestigt.

Neben kontinuierlich arbeitenden Durchlaufmischern können auch chargenweise arbeitende Mischer verwendet werden.

## Patentansprüche

1. Verfahren zur Aufbereitung von beschichtetem Bildröhrenglas,
wobei die Bildröhre in einem Brecher (13) zerkleinert wird, danach die Bildröhrenbruchstücke in Glasbruch und Metallteile getrennt werden, anschließend der Glasbruch über ein Förderband (14) einem Mischer (18) zugeführt wird, in dem die Beschichtung des Glasbruches durch Reibung der Glasbruchstücke aneinander abgerieben wird, wobei der Abrieb von einer zugegebenen Flüssigkeit aufgenommen wird, und danach der gereinigte Glasbruch über ein Sieb (23) von der Flüssigkeit getrennt und abgezogen wird.

2. Verfahren nach Anspruch 1,
dadurch gekennzeichnet, daß dem Mischer (18) zusätzlich zum Glasbruch Reibkörper zugegeben werden, wobei als Reibkörper vorzugsweise Kugeln, Ellipsoide, Quader oder dgl. mit abrasiver Oberfläche oder Sand, metallische Stoffe oder dgl. zugegeben werden.

3. Verfahren nach Anspruch 1 oder 2,
dadurch gekennzeichnet, daß im Mischer (18) Einbauten wie Messer, Bänder oder Ketten vorgesehen werden.

4. Verfahren nach einem der Ansprüche 1 bis 3,
dadurch gekennzeichnet, daß der Mischer (18) ein Freifallmischer ist.

5. Verfahren nach einem der Ansprüche 1 bis 4,
dadurch gekennzeichnet, daß als Flüssigkeit Wasser zugegeben wird, welches vorzugsweise im Umlaufsystem umgepumpt und dabei von den abgewaschenen Verunreinigungen insbesondere durch Absetzen oder Filtrieren befreit wird.

6. Verfahren nach einem der Ansprüche 1 bis 5,
dadurch gekennzeichnet, daß der Glaskonus (1) der Bildröhre vor der Zerkleinerung im Bereich des Konushalses (1.2) zur Belüftung vorzugsweise mittels eines Lasers geöffnet wird.

7. Verfahren nach einem der Ansprüche 1 bis 6,
dadurch gekennzeichnet, daß der Glasbruch im Mischer (18) (18) kontinuierlich gereinigt wird.

8. Verfahren nach einem der Ansprüche 1 bis 6,
dadurch gekennzeichnet, daß das Schirmglas und das Konusglas getrennt der Wiederverwendung zugeführt werden.

## Claims

1. Method for the treatment of coated picture tube glass, the picture tubes being crushed in a breaker (13), after which the broken pieces of picture tube are separated into broken glass and metal parts, then the broken glass is supplied by way of a conveyor belt (14) to a mixer (18), in which the coating on the broken glass is abraded by rubbing the pieces of broken glass one against the other, the abraded material being incorporated in an added liquid and then the cleaned broken glass being separated from the liquid by way of a filter (23) and removed.

2. Method according to Claim 1, characterised in that friction substances are added to the mixer (18) in addition to the broken glass, as the friction substances, preferably balls, ellipsoids, cubes or the like with an abrasive surface or sand, metallic materials or the like are added.

3. Method according to Claim 1 or 2, characterised in that components such as cutters, belts or chains are provided in the mixer (18).

4. Method according to one of Claims 1 to 3, characterised in that the mixer (18) is a freefall mixer.

5. Method according to one of Claims 1 to 4, characterised in that water is added as the liquid, which is preferably pumped around in the circulating system and the impurities washed away are removed therefrom in particular by settling or filtration.

6. Method according to one of Claims 1 to 5, characterised in that before crushing, the glass cone (1) of the picture tubes is opened in the region of the cone neck (1.2) for ventilation, preferably by means of a laser.

7. Method according to one of Claims 1 to 6, characterised in that the broken glass is continuously cleaned in the mixer (18).

8. Method according to one of Claims 1 to 6, characterised in that the screen glass and the cone glass are supplied separately for re-use.

## Revendications

1. Procédé de traitement de verre à tubes images comportant un revêtement, le tube image étant fractionné dans un concasseur (13), les morceaux des tubes images étant ensuite séparés en calcin et en pièces métalliques, après quoi le calcin est introduit par l'intermédiaire d'une bande transporteuse (14) dans un mélangeur (18) dans lequel le revêtement du calcin est enlevé par frottement des morceaux de verre les uns contre les autres, la poussière d'abrasion étant recueillie par un liquide ajouté, puis le calcin nettoyé étant sépare du liquide par l'intermédiaire d'un tamis (23) et évacué.

2. Procédé selon la revendication 1, caractérisé en ce que dans le mélangeur (18) sont introduits, en plus du calcin, des corps de friction, lesdits corps de friction étant avantageusement des billes, des ellipsoïdes, des parallélépipèdes ou analogues avec une surface abrasive, ou du sable, des substances métalliques ou analogues.

3. Procédé selon l'une des revendications 1 ou 2, caractérisé en ce que dans le mélangeur (18) sont prévues des chicanes telles que des lames, des bandes ou des chaînes.

4. Procédé selon l'une des revendications 1 à 3, caractérisé en ce que le mélangeur (18) est un mélangeur à chute libre.

5. Procédé selon l'une des revendications 1 à 4, caractérisé en ce que le liquide ajouté est de l'eau pompée de préférence dans un système a circuit fermé et libérée des impuretés enlevées par lavage, en particulier par déposition ou par filtration.

6. Procédé selon l'une des revendications 1 à 5, caractérisé en ce que, pour assurer la ventilation, le cône de verre (1) du tube image est ouvert avant la fragmentation du tube image, de préférence au moyen d'un laser, dans la région du col du cône (1.2.).

7. Procédé selon l'une des revendications 1 à 6, caractérisé en ce que le calcin est nettoyé en continu dans le mélangeur (18).

8. Procédé selon l'une des revendications 1 à 6, caractérisé en ce que le verre d'écran et le verre de cône sont recyclés séparément.
